# EUROPÄISCHE PATENTSCHRIFT

(11) **EP 1 846 524 B1**
(45) Veröffentlichungstag und Bekanntmachung des Hinweises auf die Patenterteilung: **15.04.2009**
(21) Anmeldenummer: 06707991.3
(22) Anmeldetag: 02.02.2006
(51) Int. Cl.: C09D 133/04, C09D 125/04, B01D 39/00, B32B 27/00

(54) **VERWENDUNG EINER WÄSSRIGEN POLYMERDISPERSION ALS BINDEMITTEL FÜR CELLULOSISCHE FASERN SOWIE ZUR HERSTELLUNG VON FILTERMATERIALIEN**
USE OF AN AQUEOUS POLYMER DISPERSION AS A BINDING AGENT FOR CELLULOSE FIBERS AND FOR THE PRODUCTION OF FILTER MATERIALS
UTILISATION D'UNE DISPERSION POLYMERE AQUEUSE COMME LIANT POUR DES FIBRES CELLULOSIQUES ET POUR REALISER DES MATIERES FILTRANTES

(30) Priorität: 03.02.2005 DE 102005005205
(43) Veröffentlichungstag der Anmeldung: 24.10.2007
(73) Patentinhaber: BASF SE, 67056 Ludwigshafen (DE)
(72) Erfinder: BOTHE, Marc, 67117 Limburgerhof (DE); GERST, Matthias, 67435 Neustadt (DE); LAUBENDER, Matthias, 67105 Schifferstadt (DE)
(86) Internationale Anmeldenummer: PCT/EP2006/050630
(87) Internationale Veröffentlichungsnummer: WO 2006/082223

(56) Entgegenhaltungen:
- EP-A- 0 885 906
- GB-A- 1 278 813

## Beschreibung

Die vorliegende Erfindung betrifft die Verwendung einer wässrigen Polymerdispersion, enthaltend Methacrylsäure und N-Methylol-Acrylamid, als Bindemittel für die Herstellung von Filtermaterialien und für Rohpapier für Dekorfolien.

Desweiteren betrifft die Erfindung nach dem Verfahren erhältliche Filtermaterialien und Dekorfolien.

Die Verfestigung von flächenförmigen Gebilden, beispielsweise Faservliesen oder Papieren, oder von Formkörpern, wie Faserplatten oder Spanplatten, erfolgt häufig auf chemischem Weg unter Verwendung eines polymeren Bindemittels. Die polymeren Bindemittel können u.a. in Form einer wässrigen Lösung oder einer wässrigen Dispersion verwendet werden.

Aus der EP-A-445 578 sind Platten aus feinteiligen Materialien, wie beispielsweise Glasfasern bekannt, in denen Mischungen aus hochmolekularen Polycarbonsäuren und mehrwertigen Alkoholen, Alkanolaminen oder mehrwertigen Aminen als Bindemittel fungieren.

Aus der EP-A-583 086 sind beispielsweise wässrige Bindemittel zur Herstellung von Faservliesen, insbesondere Glasfaservliesen, bekannt. Die Bindemittel enthalten eine Polycarbonsäure mit mindestens zwei Carbonsäuregruppen und gegebenenfalls auch Anhydridgruppen sowie ein Polyol. Diese Bindemittel benötigen einen phosphorhaltigen Reaktionsbeschleuniger, um ausreichende Festigkeiten der Glasfaservliese zu erreichen. Es wird darauf hingewiesen, dass auf die Anwesenheit eines derartigen Reaktionsbeschleunigers nur verzichtet werden kann, wenn ein hochreaktives Polyol eingesetzt wird. Als hochreaktive Polyole werden β-Hydroxyalkylamide genannt.

In der EP-A 882 074 werden Bindemittel für Formkörper beschrieben, welche aus einem durch radikalische Polymerisation erhaltenen Polymerisat aus einem ungesättigten Säureanhydrid oder einer ungesättigten Dicarbonsäure und einem Alkanolamin bestehen. Derartige Bindemittel werden u.a. auf Faservliesen aufgebracht, welche als Trägermaterialien in Beschichtungsprozessen dienen.

Gegenstand der DE-A 19949592 sind wässrige Polymerlösungen, enthaltend gelöste Polymerteilchen aus mindestens einem Polymerisat aus ethylenisch ungesättigten Carbonsäuren und Estern von ungesättigten Carbonsäuren, sowie weiteren Monomeren. Derartige wässrige Polymerlösungen werden ebenfalls u.a. als Bindemittel für Faservliese, beispielsweise aus Cellulose eingesetzt.

Aus der EP-A 882 074 und der DE-A 19949592 ist außerdem nicht bekannt, derartige wässrige Lösungen bzw. derartige wässrige Polymerdispersionen als Bindemittel zur Herstellung von Filtermaterialien einzusetzen.

Bindemittel für Filtermaterialien wie beispielsweise Filterpapier oder Filtergewebe müssen dem Substrat u.a. eine hohe mechanische Stabilität verleihen (Reißfestigkeit, Berstfestigkeit), insbesondere nach Lagerung im Feuchtklima und bei erhöhter Temperatur. Darüber hinaus müssen derartige Bindemittel eine hohe chemische Resistenz, beispielsweise bei Einwirkung von Lösungsmitteln, gewährleisten und sollten die Durchlässigkeit (Porengröße) des Filtermaterials möglichst nicht bzw. nur gering beeinflussen.

In der Filtermaterialherstellung erwiesen sich bisher Bindemittel mit einem sehr hohen Anteil an Säuregruppen gelegentlich als nachteilig, da damit verfestigte Filtermaterialien auf Basis von Cellulosefasern mitunter eine verminderte Standfestigkeit aufweisen, die sich u.a. in einer verringerten Berstfestigkeit im Langzeittest oder nach Lagerung bei erhöhter Temperatur äußert.

Der vorliegenden Erfindung lag daher die Aufgabe zu Grunde, den geschilderten Nachteilen abzuhelfen und ein verbessertes Bindemittel für Filtermaterialien und Rohpapier für Dekorfolien bereit zu stellen, welches sich u.a. durch eine hohe mechanische Stabilität und chemische Resistenz auszeichnet und die Durchlässigkeit der Filtermaterialien möglichst nicht beeinflusst. Darüber hinaus erstreckt sich die vorliegende Erfindung auch auf die mit den verbesserten Bindemitteln versehenen Filtermaterialien und Dekorfolien.

Die Aufgabe wurde erfindungsgemäß gelöst durch die Verwendung einer wässrigen Polymerdispersion gemäß Anspruch 1.

Ein weiterer Gegenstand der Erfindung sind Filtermaterialien und Dekorfolien enthaltend die erfindungsgemäße Polymerdispersion sowie ein Verfahren zum Beschichten der Filtermaterialien bzw. Dekorfolien.

Ein weiterer Gegenstand der Erfindung ist ein Emulsionspolymerisat enthaltend
a) 0,5-1,5 Gew.-% Methacrylsäure
b) 2-8 Gew.-% Methylmethacrylat
c) 2-3 Gew.-% N-Methylol-Acrylamid
d) 20-50 Gew.-% n-Butylacrylat und 45-65 Gew.-% Styrol sowie gegebenenfalls
e) 0,1-1 Gew.-% Acrylsäure.

Die erfindungsgemäßen Dispersionen zeichnen sich durch eine gute Methanol-Verträglichkeit aus.

Vorzugsweise enthält die erfindungsgemäß verwendete wässrige Polymerdispersion 0,1 bis 5 Gew.-% Methacrylsäure, besonders bevorzugt 0,5 bis 1,5 Gew.-% Methacrylsäure.

Der Anteil an Methylmethacrylat beträgt 1 bis 10 Gew.-%, vorzugsweise 2 bis 8 Gew.-%. Darüber hinaus enthält das Polymer 0,1 bis 4 Gew.-% N-Methylol-Acrylamid, vorzugsweise 0,5 bis 3 Gew.-% und ganz besonders bevorzugt 2-3 Gew.-%.

Im übrigen enthält das Polymer die sogenannten Hauptmonomere M.

Die Hauptmonomere M sind ausgewählt aus den C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und 1 oder 2 Doppelbindungen, oder aus Mischungen davon.

Zu nennen sind z. B. (Meth)acrylsäurealkylester mit einem C₁-C₁₀-Alkylrest, wie Methylmethacrylat, Methylacrylat, n-Butylacrylat, Ethylacrylat und 2-Ethylhexylacrylat.

Es sind auch Mischungen der (Meth)acrylsäurealkylester geeignet.

Vinylester von Carbonsäuren mit 1 bis 20 C-Atomen sind z. B. Vinyllaureat, -stearat, Vinylpropionat, Versaticsäurevinylester und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht.

Beispiele für Nitrile sind Acrylnitril und Methacrylnitril.

Die Vinylhalogenide sind mit Chlor, Fluor oder Brom substituierte ethylenisch ungesättigte Verbindungen.

Als Vinylether zu nennen sind z. B. Vinylmethylether oder Vinylisobutylether. Bevorzugt werden Vinylether mit 1 bis 4 C-Atome enthaltenden Alkoholen eingesetzt.

Als Kohlenwasserstoffe mit 2 bis 8 C-Atomen und zwei olefinischen Doppelbindungen seien Butadien, Isopren und Chloropren genannt; solche mit einer Doppelbindung sind z. B. Ethen oder Propen.

Bevorzugte Hauptmonomere sind Acrylsäurealkylester, Styrol und insbesondere Mischungen von Styrol und Acrylsäurealkylestern, insbesondere von Styrol und n-Butylacrylat.

Neben diesen Hauptmonomeren kann das Polymer weitere Monomere, z. B. Hydroxylgruppen enthaltende Monomere, insbesondere C1-C10-Hydroxyalkyl(meth)acrylate, Carbonsäuren, Dicarbonsäuren und deren Anhydride oder Halbester, z. B. Acrylsäure, Maleinsäure, Fumarsäure und Maleinsäureanhydrid als Bestandteile enthalten.

Die Polymere sind aufgebaut aus
a) 0,5-1,5 Gew.-% Methacrylsäure
b) 2-8 Gew.-% Methylmethacrylat
c) 2-3 Gew.-%N-Methylol-Acrylamid
d) 20-50 Gew.-% n-Butylacrylat und 45-65 Gew.-% Styrol sowie aus gegebenenfalls
e) 0,1-1 Gew.-% Acrylsäure.

Die Herstellung der wässrigen Dispersion erfolgt vorzugsweise durch Emulsionspolymerisation; bei den Polymeren handelt es sich daher um ein Emulsionspolymerisat.

Im allgemeinen werden bei der Emulsionspolymerisation ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständliche müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest; C₈- bis C₃₆), ethoxylierte Mono-, Di- und Tri-Alkylphenole (EO-Grad: 3 bis 50, Alkylrest: (C₄- bis C₉), Alkalimetallsalze von Dialkylestern der Sulfobernsteinsäure sowie Alkali- und Ammoniumsalze von Alkylsulfaten (Alkylrest: C₈- bis C₁₂), von ethoxylierten Alkanolen (EO-Grad: 4 bis 30, Alkylrest: C₁₂- bis C₈), von ethoxylierten Alkylphenolen (EO-Grad: 3 bis 50, Alkylrest: C₄ bis C₉), von Alkylsulfonsäuren (Alkylrest: C₁₂- bis C₁₈) und von Alkylarylsulfonsäuren (Alkylrest: C₉- bis C₁₈).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax^{®} 2 A1, Emulan^{®} NP 50, Dextrol^{®} OC 50, Emulgator 825, Emulgator 825 S, Emulan^{®} OG, Texapon^{®} NSO, Nekanil^{®} 904 S, Lumiten^{®} I-RA, Lumiten E 3065 etc.

Die grenzflächenaktive Substanz wird üblicherweise in Mengen von 0,1 bis 10 Gew.-%, bezogen auf alle zu polymerisierenden Monomeren verwendet.

Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid.

Geeignet sind insbesondere sogenannte Reduktions-, Oxidations(Red-Ox)-lnitiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z. B. Natriumsulfit, Natriumhydrogensulfit, Alkalisalze der dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z.B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein, z. B. eine Mischung aus dem Natriumsalz der Hydroxymethansulfinsäure und Natriumdisulfit.

Die genannten Verbindungen werden meist in Form wässeriger Lösungen eingesetzt, wobei die untere Konzentration durch die in der Dispersion vertretbare Wassermenge und die obere Konzentration durch die Löslichkeit der betreffenden Verbindung in Wasser bestimmt ist.

Im allgemeinen beträgt die Konzentration 0,1 bis 30 Gew.-%, bevorzugt 0,5 bis 2,0 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,2 bis 5 Gew.-%, bezogen auf alle zu polymerisierenden Monomeren. Es können auch mehrere, verschiedene Initiatoren bei der Emulsionspolymerisation Verwendung finden.

Die Emulsionspolymerisation erfolgt in der Regel bei 30 bis 150, vorzugsweise 50 bis 90°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes oder auch eine Polymersaat vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt.

Die Art und Weise, in der der Initiator im Verlauf der radikalischen wässrigen Emulsionspolymerisation dem Polymerisationsgefäß zugegeben wird, ist dem Durchschnittsfachmann bekannt. Es kann sowohl vollständig in das Polymerisationsgefäß vorgelegt, als auch nach Maßgabe seines Verbrauchs im Verlauf der radikalischen wässrigen Emulsionspolymerisation kontinuierlich oder stufenweise eingesetzt werden. Im einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach Ende der eigentlichen Emulsionspolymerisation, d. h. nach einem Umsatz der Monomeren von mindestens 95 %, Initiator zugesetzt.

Häufig werden bei den erhaltenen wässrigen Polymerisatdispersionen die Restgehalte an nicht umgesetzten Monomeren sowie anderen leichtsiedenden Verbindungen durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt.

Bei der Emulsionspolymerisation wird eine wässrige Dispersion eines Polymeren erhalten.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, Hydroxylammoniumsalze wie Hydroxylammoniumsulfat, Ameisensäure, Natriumbisulfit oder Isopropanol. Die Polymerisationsregler werden im Allgemeinen in Mengen von 0,05 bis 5 Gew.-%, bezogen auf die Monomere, eingesetzt. Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z. B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandioldimethacrylat. Auch die Acrylsäure- und Methacrylsäureester von Alkoholen mit mehr als 2 OH-Gruppen können als Vernetzer eingesetzt werden, z. B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykolen mit Molekulargewichten von jeweils 200 bis 9.000.

Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z. B. Diethylenglykoldiacrylat, Diethylenglykoldimethacrylat, Triethylenglykoldiacrylat, Triethylenglykoldimethacrylat, Tetraethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z. B. Tegomereä der Th. Goldschmidt AG). Die Vernetzer werden vorzugsweise in Mengen von 10 ppm bis 5 Gew.-%, bezogen auf die zu polymerisierenden Monomere, eingesetzt.

Als Vernetzungsbeschleuniger können u. a. phosphorhaltige Verbindungen, insbesondere phosphorige und hypophosphorige Säuren und deren Salze verwendet werden.

Zusätzlich zu den genannten Bestandteilen können in den wässrigen Polymerdispersionen übliche Zusätze je nach Anwendungszweck enthalten sein.

Die in der wässrigen Polymerdispersion gegebenenfalls zusätzlich enthaltenen Komponenten werden üblicherweise nach dem Ende der Emulsionspolymerisation zugegeben.

Die erfindungsgemäß zu verwendenden wässrigen Polymerdispersionen können zur Modifikation verschiedener Eigenschaftsmerkmale auch mit einer oder mehreren anderen Polymerdispersionen, Polymerlösungen oder Polymerpulvern gemischt werden.

Ferner ist zur Modifikation die Zumischung weiterer Mischungskomponenten möglich, u.a. von organischen Komponenten wie z. B. Epoxy-funktioneller Komponenten, Formaldehydharze, Komponenten mit Isocyanat-oder Urethangruppen, amino-, carboxy- oder hydroxyfunktionalisierte Mono- oder Disilan- bzw. -siloxanverbindungen, oder anderer substituierter oder nicht substituierter Kohlenwasserstoffverbindungen.

Desweiteren können zu den wässrigen Polymerdispersionen zusätzlich auch anorganische Komponenten zugegeben werden (Füllstoffe, Rheologieadditive, Haftvermittler, Vemetzungsbeschleuniger, etc.). Beispielhaft zu nennen sind Pigmente, Füllstoffe, Salze, Oxide.

Die erfindungsgemäß zu verwendenden Polymerdispersionen können bei Bedarf auch mehrere der zuvor genannten Mischkomponenten gleichzeitig enthalten.

Weiter können die wässrigen Polymerdispersionen übliche Zusätze je nach Anwendungszweck enthalten. Beispielsweise können sie Bakterizide oder Fungizide enthalten. Darüber hinaus können sie Hydrophobierungsmittel zur Erhöhung der Wasserfestigkeit der behandelten Substrate enthalten. Geeignete Hydrophobierungsmittel sind übliche wässrige Paraffindispersionen oder Silicone. Weiter können die Zusammensetzungen Netzmittel, Verdickungsmittel, Plastifizierungsmittel, Retentionsmittel, Pigmente und Füllstoffe enthalten. Das Einmischen dieser Füllstoffe kann auch durch Induktionserwärmung erfolgen, was die Aushärtung erleichtert.

Darüber hinaus kann es sich empfehlen, für eine schnellere Vernetzung bei tieferen Temperaturen noch bestimmte Epoxidverbindungen hinzuzufügen beispielsweise di- oder trifunktionelle Glycidylether wie Bisphenol-A-diglycidylether oder Butandioldiglycidylether, also vor allem aromatische und aliphatische Glycidylether. Weiter geeignete Epoxidverbindungen sind cycloaliphatische Glycidylverbindungen, heterocyclische Glycidylverbindungen und cycloaliphatische Epoxidharze.

Schließlich können die wässrigen Polymerdispersionen übliche Brandschutzmittel, wie z. B. Aluminiumsilikate, Aluminiumhydroxide, Borate und/oder Phosphate enthalten.

Häufig enthalten die wässrigen Polymerdispersionen auch Kupplungsreagenzien, wie Alkoxysilane, beispielsweise 3-Aminopropyltriethoxysilan, lösliche oder emulgierbare Öle als Gleitmittel und Staubbindemittel sowie Benetzungshilfsmittel.

Die wässrigen Polymerdispersionen können auch in Abmischung mit anderen Bindemitteln, wie beispielsweise Harnstoff-Formaldehyd-Harzen, Melamin-Formaldehyd-Harzen oder Phenol-Formaldehyd-Harzen, mit Epoxidharzen sowie mit Mischungen von Lösungspolymerisaten z. B. mit Bindemitteln des Warenzeichens Acrodur^{®}, der Fa. BASF Aktiengesellschaft, eingesetzt werden. Diese Bindemittel werden häufig in methanolischer Lösung eingesetzt. Entscheidender Vorteil der erfindungsgemäßen Dispersionen ist die gute Methanolstabilität, die ein Auftreten von unerwünschten Koagulaten verhindert.

Die erfindungsgemäß einzusetzenden, wässrigen Polymerdispersionen stellen feinteilige, stabile Latices dar. Die gewichtsmittlere Teilchengröße der Latexpartikel beträgt etwa 10 bis 1 500 nm, bevorzugt 20 bis 1 000 nm, besonders bevorzugt 30 bis 500 nm, gemessen mit Hilfe der analytischen Ultrazentrifuge (AUZ).

Die erfindungsgemäß einzusetzenden, wässrigen Polymerdispersionen können mit Wasser oder verdünnten Salz- bzw. Tensid-Lösungen unbegrenzt verdünnt werden, ohne dass es zu einem Koagulieren der Latex-Partikel kommt. Sie haben einen Gehalt an nicht flüchtigen Anteilen (Feststoffgehalt) im Bereich von etwa 20 bis 75 Gew.-%, bevorzugt 25 bis 65 Gew.-%. Die Viskosität (bei einem Feststoffgehalt von 40 Gew.-%) liegt im Allgemeinen in einem Bereich von etwa 10 bis 4 000 mPas, gemessen mit einem Rotationsviskosimeter gemäß DIN 53019 bei 23°C und einer Schergeschwindigkeit von 250 S⁻¹.

Die erfindungsgemäß zu verwendenden wässrigen Polymerdispersionen können auch nach vorheriger Verdünnung mit Wasser dem Filtermaterial zugesetzt werden. Ferner kann es vorteilhaft sein, die wässrigen Polymerdispersionen in Abmischung mit wasserverträglichen Lösungsmitteln wie zum Beispiel Alkoholen, insbesondere Methanol, Ethanol oder dergleichen zu applizieren. Die wässrigen Polymerdispersionen weisen insbesondere eine gute Verträglichkeit gegenüber diesen Lösungsmitteln auf. Die Applikation aus wässriger Phase stellt jedoch einen weiteren Vorteil der erfindungsgemäßen Bindemitteldispersion gegenüber lösemittelhaltigen Systemen dar.

Die beschriebenen wässrigen Polymerdispersionen werden erfindungsgemäß als Bindemittel für die Herstellung von Filtermaterialien, insbesondere von Filterpapieren oder Filtergeweben, verwendet. Gewebematerialien können beispielsweise sein Cellulose, Baumwolle, Polyester, Polyamid, PE, PP, Glasvliese, Glaswolle. Dabei kann es sich empfehlen, die wässrigen Polymerdispersionen vor dem Auftragen auf das entsprechende Papier oder Gewebe durch Zugabe von verschiedenen anorganischen oder organischen Basen auf einen pH-Wert von 2 bis 8, insbesondere von 3,0 bis 6,5 einzustellen. Geeignete Basen sind u. a. Triethanolamin, Diethanolamin, Monoethanolamin, Hydroxyalkylamine, Ammoniak, organische mono- oder polyfunktionelle Amine, Alkoholate sowie Metallalkylverbindungen, aber auch anorganische Basen wie zum Beispiel Natronlauge oder Kaliumhydroxid. Durch das Einstellen des pH-Wertes auf den angegebenen Wertebereich wird u. a. das Abfallen der Berstfestigkeit nach Lagerung oder thermischer Belastung reduziert und somit eine hohe Wärmestandfestigkeit erreicht.

Das Auftragen der erfindungsgemäß zu verwendenden Polymerdispersion auf die Filtermaterialien, also u. a. auf Filterpapier oder Filtergewebe erfolgt vorzugsweise nach dem sogenannten Tränkverfahren oder durch Aufsprühen. Dabei werden die wässrigen Polymerdispersionen, meist in mit Wasser oder Methanol verdünnter Form, durch Beleimen auf die Fittermaterialien aufgebracht. Es empfiehlt sich, nach dem Beleimen der Filtermaterialien mit den wässrigen Polymerdispersionen diese noch 0,1 bis 60 Minuten lang, insbesondere 1 bis 60 Minuten lang bei Temperaturen von 100 bis 250°C, insbesondere von 110 bis 220°C zu tempern, d. h. zu härten.

Die erfindungsgemäße Verwendung der wässrigen Polymerdispersion als Bindemittel für Filtermaterialien hat zur Folge, dass die behandelten Filtermaterialien u. a. eine erhöhte mechanische Stabilität aufweisen (höhere Reißfestigkeit und Berstfestigkeit), insbesondere nach Lagerung im Feuchtklima und bei erhöhter Temperatur. Weiterhin bewirkt die erfindungsgemäße Verwendung der wässrigen Bindemittel, dass die erhaltenen Filtermaterialien u. a. durch eine hohe chemische Resistenz, beispielsweise gegenüber Lösungsmitteln, gekennzeichnet sind, ohne dass dabei die Durchlässigkeit (Porengröße) des Filtermaterials beeinflusst wird. Durch die Verwendung der wässrigen Polymerdispersionen beobachtet man auch, dass diese den Filtermaterialien bereits nach der Trocknung eine hohe Festigkeit verleihen (Trockenreißfestigkeit), wobei sich aber die Filtermaterialien auch nach der Trocknung unterhalb der Härtungstemperatur der wässrigen Polymerdispersionen noch gut einer Verformung durch Falten, Rillieren oder Plissieren unterziehen lassen. Nach der anschließenden thermischen Aushärtung (Tempern) verleihen die Polydispersionen den dadurch erhaltenen ebenfalls erfindungsgemäßen Filtermaterialien, im wesentlichen Filterpapiere oder Filtergewebe, eine hohe Formstabilität. Diese Eigenschaft ermöglicht die Herstellung von Halbzeugen und damit die Auftrennung des Herstellungsprozesses in einzelne voneinander entkoppelte Produktionsschritte.

Eine weitere Anwendung der erfindungsgemäßen Polymerdispersionen ist Verwendung zum Imprägnieren von Rohpapieren oder Faservliesen sowie die Verwendung der imprägnierten Rohpapiere zur Herstellung von Dekorfolien.

Spanplatten werden oft mit Dekorfolien beschichtet und werden so zur Herstellung von Möbeln verwendet. Dekorfolien bestehen im wesentlichen aus einem imprägnierten Rohpapier, welches mit einer Druckfarbe bedruckt ist und so das gewünschte Erscheinungsbild aufweist und welches im allgemeinen mit einem Schutzüberzug eines Formaldehydharzes beschichtet ist.

Die anwendungstechnischen Eigenschaften der Dekorfolie werden im wesentlichen durch das imprägnierte Rohpapier bestimmt. Die Imprägnierung des Rohpapiers soll insbesondere die Festigkeit des Rohpapiers erhöhen, eine gute Verträglichkeit mit der Druckfarbe und dem Schutzüberzug und insbesondere einen guten Zusammenhalt der Schichten in der Dekorfolie bewirken.

Der erfindungsgemäß verwendeten Polymerdispersion können vor der Imprägnierung noch Zusatzstoffe, wie Entschäumer, Fixiermittel, Verlaufsmittel, Farbstoffe, Füllstoffe oder Verdicker zugesetzt werden.

Als Rohpapier kommen übliche Faserzellstoffe in Betracht, welche z. B. durch Leimungsmittel zu einem Rohpapier verfestigt wurden. Rohpapiere sind nicht mit einer Papierstreichmasse beschichtet.

Die Imprägnierung erfolgt im allgemeinen in einer Tränkungsanlage, in der das Rohpapier oder das Faservlies mit der wässrigen Dispersion des Polymeren auf einer Seite oder bevorzugt auf beiden Seiten in Kontakt gebracht wird. Vorzugsweise erfolgt die Imprägnierung durch Eintauchen in die wässrige Dispersion. Nach der Imprägnierung wird das Rohpapier im allgemeinen getrocknet, vorzugsweise bei Temperaturen von 100 bis 180°C.

Das imprägnierte Rohpapier kann zur Herstellung von Dekorpapieren verwendet werden. Die Dekorpapiere finden zur Beschichtung von Möbeln oder Möbelteilen Verwendung und werden in diesem Zusammenhang auch Möbeldekorfolien genannt.

Die zur Imprägnierung erfindungsgemäß verwendete Polymerdispersion zeigt im wesentlichen unabhängig von der Teilchengröße der dispergierten Polymerteilchen ein gutes Penetrationsverhalten. Die mit der erfindungsgemäßen Polymerdispersion imprägnierten Papiere haben gute anwendungstechnische Eigenschaften, beispielsweise eine hohe Reißfestigkeit.

### Beispiele

Die Feststoffgehalte wurden generell bestimmt, indem eine definierte Menge der wässrigen Polymerisatdispersion (ca. 5 g) bei 140 °C in einem Trockenschrank bis zur Gewichtskonstanz getrocknet wurde. Es wurden jeweils zwei separate Messungen durchgeführt. Der in den jeweiligen Beispielen angegebene Wert stellt den Mittelwert der beiden Messergebnisse dar.

Der mittlere Teilchendurchmesser der Copolymerisatteilchen wurde generell durch dynamische Lichtstreuung an einer 0,005 bis 0,01 gewichtsprozentigen wässrigen Dispersion bei 23°C mittels Autosizer IIC der Fa. Malvern Instruments, England, ermittelt. Angegeben wird der mittlere Durchmesser der Kumulantenauswertung (cumulant z-average) der gemessenen Autokorrelationsfunktion (ISO-Norm 13321).

### Beispiel 1

In einem 3-I-Polymerisationsreaktor mit Blattrührer und Heiz-/Kühleinrichtung wurde ein Gemisch aus 564,2 g entionisiertem Wasser und 15,36 g eines 33 gew.-%igen wässrigen Polymerlatex (hergestellt durch radikalisch initiierte Emulsionspolymerisation von Styrol) mit einem gewichtsmittleren Teilchendurchmesser Dw₅₀ von 30 nm unter Stickstoffatmosphäre auf 93°C erhitzt. Dazu wurden bei vorgenannter Temperatur 18,55 g einer 7 gew.-%igen wässrigen Lösung von Natriumperoxodisulfat gegeben. Nach 5 min wurden Zulauf 1 und Zulauf 2 gestartet und gleichmäßig über 2 h zudosiert.

Zulauf 1 war eine wässrige Emulsion hergestellt aus
520,0 g entionisiertem Wasser
27,86 g einer 28 gew.-%igen wässrigen Lösung von Natriumlaurylethersulfat (Natriumsalze der Schwefelsäurehalbester ethoxylierter Laurylalkohole mit einem Ethxoylierungsgrad von 3 bis 5)
43,33 g einer 3 gew.-%igen wässrigen Lösung von Natriumpyrophosphat
9,75 g Methacrylsäure
54,17 g einer 48 gew.-%igen wässrigen Lösung von N-Methylolacrylamid
65,0 g Methylmethacrylat
702,0 g Styrol
497,3 g n-Butylacrylat.

Zulauf 2 waren 50,17 g einer 7 gew.-%igen wässrigen Lösung von Natriumperoxodisulfat.

Nach Ende der Zuläufe 1 und 2 wurde die Reaktorinnentemperatur auf 90°C abgesenkt. Danach wurden Zulauf 3 und Zulauf 4 gestartet und gleichmäßig über 90 min zudosiert.

### Zulauf 3 war eine 10 gew.-%ige wässrige Lösung von tert-Butylhydroperoxid

### Zulauf 4 war eine 13,3 gew.-%ige wässrige Lösung von Acetonbisulfit

Nach Ende der Zuläufe 3 und 4 wurde die Reaktorinnentemperatur auf 25°C abgesenkt. Danach wurden 0,52 g einer 25 gew.-%igen wässrigen Lösung von Ammoniak zugegeben.
Die erhaltene wässrige Polymerisatdispersion wies einen Feststoffgehalt von 50,2 Gew.-% auf. Die mittlere Teilchengröße betrug 193 nm.

### Vergleichsbeispiel 1

Es wurde eine Dispersion nach der Vorschrift von Beispiel 1 hergestellt, mit dem Unterschied, dass Zulauf 1 kein Methylmethacrylat und 767,0 g Styrol enthielt.
Die erhaltene wässrige Polymerisatdispersion wies einen Feststoffgehalt von 49,9 Gew.-% auf. Die mittlere Teilchengröße betrug 195 nm.

### Vergleichsbeispiel 2

Es wurde eine Dispersion nach der Vorschrift von Beispiel 1 hergestellt, mit dem Unterschied, dass Zulauf 1 26,0 g Methacrylsäure und 685,75 g Styrol enthielt.
Die erhaltene wässrige Polymerisatdispersion wies einen Feststoffgehalt von 49,8 Gew.-% auf. Die mittlere Teilchengröße betrug 192 nm.

### Vergleichsbeispiel 3

Es wurde eine Dispersion nach der Vorschrift von Beispiel 1 hergestellt, mit dem Unterschied, dass Zulauf 1 429,0 g entionisiertes Wasser, kein N-Methylolacrylamid und 173,33 g einer 15 gew.-%igen wässrigen Lösung von N-Methylolmethacrylamid enthielt.
Die erhaltene wässrige Polymerisatdispersion wies einen Feststoffgehalt von 50,6 Gew.-% auf. Die mittlere Teilchengröße betrug 196 nm.

### Vergleichsbeispiel 4

Es wurde eine Dispersion nach der Vorschrift von Beispiel 1 hergestellt, mit dem Unterschied, dass Zulauf 1 keine Methacrylsäure und 9,75 g Acrylsäure enthielt.
Die erhaltene wässrige Polymerisatdispersion wies einen Feststoffgehalt von 50,0 Gew.-% auf. Die mittlere Teilchengröße betrug 209 nm.

### Vergleichsbeispiel 5

Es wurde eine Dispersion nach der Vorschrift von Beispiel 1 hergestellt, mit dem Unterschied, dass Zulauf 1 keine Methacrylsäure und 711,75 g Styrol enthielt.
Die erhaltene wässrige Polymerisatdispersion wies einen Feststoffgehalt von 50,2 Gew.-% auf. Die mittlere Teilchengröße betrug 210 nm.

### Vergleichsbeispiel 6

Es wurde eine Dispersion nach der Vorschrift von Beispiel 1 hergestellt, mit dem Unterschied, dass Zulauf 1 507,0 g entionisiertes Wasser, 81,25 g einer 48 gew.-%igen wässrigen Lösung von N-Methylolacrylamid und 689,0 g Styrol enthielt.
Die erhaltene wässrige Polymerisatdispersion wies einen Feststoffgehalt von 50,1 Gew.-% auf. Die mittlere Teilchengröße betrug 226 nm.

### Vergleichsbeispiel 7

Es wurde eine Dispersion nach der Vorschrift von Beispiel 1 hergestellt, mit dem Unterschied, dass Zulauf 1 546,0 g entionisiertes Wasser, kein N-Methylolacrylamid und 728,0 g Styrol enthielt.
Die erhaltene wässrige Polymerisatdispersion wies einen Feststoffgehalt von 49,6 Gew.-% auf. Die mittlere Teilchengröße betrug 206 nm.

### Anwendungstechnische Prüfungen

Die Methanolverdünnbarkeit der Dispersionen wurde geprüft, indem 5 ml Dispersion in 10 ml eines Gemisches aus 90 Gew.-% Methanol und 10 Gew.-% entionisiertem Wasser eingetropft wurden. Nach 30 min Lagerung wurde die verdünnte Dispersion auf Bodensatz untersucht.

Die Viskosität der Dispersionen wurde in einem Rheomat Z 2 der Fa. Physica bei einer Schergeschwindigkeit von 100 s⁻¹ gemäß DIN 53019 bei 23°C bestimmt.

**Tabelle 1**

| | Abweichung von erfindungsgemäßer Zusammensetzung | Methanolverdünnbarkeit | Viskosität [mPa*s] bei 100 s⁻¹ |
|---|---|---|---|
| Beispiel 1 | - | kein Bodensatz | 40 |
| Vergleichsbeispiel 1 | kein Metylmethacrylat | Bodensatz | 40 |
| Vergleichsbeispiel 2 | > 1,5 Gew.% Methacrylsäure | kein Bodensatz | 35 |
| Vergleichsbeispiel 3 | kein N-Methylolacrylamid | Bodensatz | 30 |
| Vergleichsbeispiel 4 | keine Methacrylsäure | Bodensatz | 80 |
| Vergleichsbeispiel 5 | keine Methacrylsäure | Bodensatz | 40 |
| Vergleichsbeispiel 6 | > 3,0 Gew.% N-Methylolacrylamid | kein Bodensatz | 90 |
| Vergleichsbeispiel 7 | kein N-Methylolacrylamid | Bodensatz | 20 |

Mit den Polymerdispersionen wurden Filterpapiere im Tränkverfahren beleimt. Die Flotte wurde durch Verdünnen der Dispersionen mit Wasser auf 15 Gew.-% Feststoffgehalt hergestellt. Die Papierqualität betrug 105 g/m², das Auftragsgewicht 25 Gew.-%. Die imprägnierten Filterpapiere wurden 3 min bei 180°C getrocknet. Die Prüfung erfolgte nach 24-stündiger Klimatisierung bei 23°C und 50 % relativer Luftfeuchte. Der Berstdruck wurde gemäß ISO 2758 bestimmt. Die Luftdurchlässigkeit wurde mittels eines Akustron-Meßgeräts der Fa. W. Westerteiger in Anlehnung an DIN 53887 bzw. DIN 53120 und ISO 9237 bestimmt.

**Tabelle 2**

| | Abweichung von erfindungsgemäßer Zusammensetzung | Berstdruck [kPa] bei 23°C und 50 % rel. Luftfeuchtigkeit | Luftdurchlässigkeit [l/(m²*s)] bei 23°C und 50 % rel. Luftfeuchtigkeit |
|---|---|---|---|
| Beispiel 1 | - | 450 | 800 |
| Vergleichsbeispiel 1 | kein Metylmethacrylat | 420 | 760 |
| Vergleichsbeispiel 2 | > 1,5 Gew. % Methacrylsäure | 390 | 800 |
| Vergleichsbeispiel 3 | kein N-Methylolacrylamid | 410 | 760 |
| Vergleichsbeispiel 4 | keine Methacrylsäure | 420 | 760 |
| Vergleichsbeispiel 5 | keine Methacrylsäure | 415 | 770 |
| Vergleichsbeispiel 6 | > 3,0 Gew.% N-Methylolacrylamid | 430 | 750 |
| Vergleichsbeispiel 7 | kein N-Methylolacrylamid | 370 | 820 |

## Patentansprüche

1. Verwendung einer wässrigen Polymerdispersion erhältlich durch radikalische Emulsionspolymerisation enthaltend
a) 0,5-1,5 Gew.-% Methacrylsäure
b) 2-8 Gew.-% Methylmethacrylat
c) 2-3 Gew.-% N-Methylol-Acrylamid
d) 20-50 Gew.-% n-Butylacrylat und 45-65 Gew.-% Styrol, sowie gegebenenfalls
e) 0,1 bis 1 Gew.-% Acrylsäure.
als Bindemittel für cellulosische Fasern für die Herstellung von Filtermaterialien oder als Rohpapier für Dekorfolien.

2. Verwendung der wässrigen Polymerdispersion gemäß Anspruch 1, **dadurch gekennzeichnet, dass** die wässrige Polymerdispersion durch Zugabe von anorganischen oder organischen Basen auf einen pH-Wert von 2 bis 8 eingestellt wird.

3. Verwendung der wässrigen Polymerdispersion gemäß einem der Ansprüche 1 oder 2 , **dadurch gekennzeichnet, dass** die wässrige Polymerdispersion durch Beleimen nach dem Tränkverfahren auf die Filtermaterialien oder das Papier aufgebracht wird.

4. Verwendung gemäß einem der Ansprüche 1 bis 3, **dadurch gekennzeichnet, dass** die wässrigen Polymerdispersionen auch in Abmischungen mit anderen Bindemitteln eingesetzt werden können.

5. Verfahren zum Imprägnieren oder Beschichten von Rohpapier oder Filtermaterialien durch Beleimen nach dem Tränkverfahren mit einer wässrigen Polymerdispersion erhältlich durch radikalische Emulsionspolymerisation enthaltend
a) 0,5-1,5 Gew.-% Methacrylsäure
b) 2-8 Gew.-% Methylmethacrylat
c) 2-3 Gew.-% N-Methylol-Acrylamid
d) 20-50 Gew.-% n-Butylacrylat und 45-65 Gew.-% Styrol, sowie gegebenenfalls
e) 0,1 bis 1 Gew.-% Acrylsäure.

6. Filtermaterialien enthaltend als Bindemittel ein wässriges Polymerisat gemäß einem der Ansprüche 1 bis 4.

7. Dekorfolien enthaltend als Bindemittel ein wässriges Polymerisat gemäß einem der Ansprüche 1 bis 4.

8. Emulsionspolymerisat enthaltend
a) 0,5-1.5 Gew.-% Methacrylsäure
b) 2-8 Gew.-% Methylmethacrylat
c) 2-3 Gew.-% N-Methylol-Acrylamid
d) 20-50 Gew.-% n-Butylacrylat und 45-65 Gew.-% Styrol, sowie gegebenenfalls
e) 0,1 bis 1 Gew.-% Acrylsäure.

## Claims

1. The use of an aqueous polymer dispersion obtainable by free-radical emulsion polymerization comprising
a) 0.5-1.5% by weight of methacrylic acid
b) 2-8% by weight of methyl methacrylate
c) 2-3% by weight of N-methylolacrylamide
d) 20-50% by weight of n-butyl acrylate and 45-65% by weight of styrene and, if appropriate,
e) 0.1 to 1% by weight of acrylic acid.
as a binder for cellulosic fibers for producing a filter material or as base paper for a decorative sheet.

2. The use of the aqueous polymer dispersion according to claim 1, wherein the aqueous polymer dispersion is adjusted by addition of organic or inorganic bases to a pH of 2 to 8.

3. The use of the aqueous polymer dispersion according to either of claims 1 and 2, wherein the aqueous polymer dispersion is applied by resination in accordance with the impregnating method to the filter material or the paper.

4. The use according to any one of claims 1 to 3, wherein the aqueous polymer dispersion can also be used in a blend with other binders.

5. A process for impregnating or coating base paper or filter material by resination in accordance with the impregnating method with an aqueous polymer dispersion obtainable by free-radical emulsion polymerization comprising
a) 0.5-1.5% by weight of methacrylic acid
b) 2-8% by weight of methyl methacrylate
c) 2-3% by weight of N-methylolacrylamide
d) 20-50% by weight of n-butyl acrylate and 45-65% by weight of styrene and, if appropriate,
e) 0.1 to 1% by weight of acrylic acid.

6. A filter material comprising as binder an aqueous polymer according to any one of claims 1 to 4.

7. A decorative sheet comprising as binder an aqueous polymer according to any one of claims 1 to 4.

8. An emulsion polymer comprising
e) 0.5-1.5% by weight of methacrylic acid
f) 2-8% by weight of methyl methacrylate
g) 2-3% by weight of N-methylolacrylamide
h) 20-50% by weight of n-butyl acrylate and 45-65% by weight of styrene and, if appropriate,
e) 0.1 to 1% by weight of acrylic acid.

## Revendications

1. Utilisation d'une dispersion aqueuse de polymère, pouvant être obtenue par polymérisation radicalaire en émulsion, contenant
a) 0,5-1,5 % en poids d'acide méthacrylique
b) 2-8 % en poids de méthacrylate de méthyle
c) 2-3 % en poids de N-méthylolacrylamide
d) 20-50 % en poids d'acrylate de n-butyle et 45-65 % en poids de styrène, ainsi qu'éventuellement
e) 0,1 à 1 % en poids d'acide acrylique,
en tant que liant pour fibres cellulosiques pour la production de matériaux filtrants ou en tant que papier brut pour feuilles décoratives.

2. Utilisation de la dispersion aqueuse de polymère selon la revendication 1, **caractérisée en ce que** la dispersion aqueuse de polymère est ajustée à un pH de 2 à 8 par addition de bases organiques ou inorganiques.

3. Utilisation de la dispersion aqueuse de polymère selon la revendication 1 ou 2, **caractérisée en ce que** la dispersion aqueuse de polymère est appliquée sur le matériau filtrant ou le papier par encollage selon le procédé d'imprégnation.

4. Utilisation selon l'une quelconque des revendications 1 à 3, **caractérisée en ce que** les dispersions aqueuses de polymères peuvent être également utilisées en des mélanges avec d'autres liants.

5. Procédé pour l'imprégnation ou l'enduction de papier brut ou de matériaux filtrants par encollage selon le procédé d'imbibition avec une dispersion aqueuse de polymère, pouvant être obtenue par polymérisation radicalaire en émulsion, contenant
a) 0,5-1,5 % en poids d'acide méthacrylique
b) 2-8 % en poids de méthacrylate de méthyle
c) 2-3 % en poids de N-méthylolacrylamide
d) 20-50 % en poids d'acrylate de n-butyle et 45-65 % en poids de styrène, ainsi qu'éventuellement
e) 0,1 à 1 % en poids d'acide acrylique.

6. Matériaux filtrants contenant en tant que liant un produit aqueux de polymérisation selon l'une quelconque des revendications 1 à 4.

7. Feuilles décoratives contenant en tant que liant un produit aqueux de polymérisation selon l'une quelconque des revendications 1 à 4.

8. Produit de polymérisation en émulsion, contenant
a) 0,5-1,5 % en poids d'acide méthacrylique
b) 2-8 % en poids de méthacrylate de méthyle
c) 2-3 % en poids de N-méthylolacrylamide
d) 20-50 % en poids d'acrylate de n-butyle et 45-65 % en poids de styrène, ainsi qu'éventuellement
e) 0,1 à 1 % en poids d'acide acrylique.
